# EUROPEAN PATENT APPLICATION

(11) **EP 4 520 181 A1**
(43) Date of publication of application: **12.03.2025**
(21) Application number: 24195476.7
(22) Date of filing: 20.08.2024
(51) Int. Cl.: A23G 9/50, B65D 65/46, B65D 85/78

(54) **ANTI-TIP ICE CREAM CONTAINER**

(30) Priority: 06.09.2023 US 202318461858
(71) Applicant: Chen, I-Ming, Taoyuan City (TW)
(72) Inventor: Chen, I-Ming, Taoyuan City (TW)
(74) Representative: Karakatsanis, Georgios

(57) **Abstract**

An anti-tip ice cream container, includes an edible container body having a storage space therein for ice cream, and one or multiple edible wings arranged on the top side of the container body, each wing having a supporting surface formed on the inner side for contacting the outer edge of the ice cream stored in the storage space to increase the adsorption force, so that the ice cream is not easily affected by the tilt of the container body to cause slipping or falling.

## Description

### BACKGROUND OF THE INVENTION

### 1. Field of the Invention:

The present invention provides an anti-tip ice cream container, especially provides a kind of support and adsorption force for ice cream through one or more wings arranged on the container body, which can slow down the sliding speed of the ice cream after the container body is tilted. And there is an annular groove between the outer side of the wing and the outer edge of the top side of the container body, and the annular groove can receive the liquefied fluid of the ice cream without causing it to flow to the surface of the container body. Furthermore, an anti-pulling hole is provided in each wing so that the outer edge of the ice cream can be trapped to form an anti-pulling force, which can strengthen the adsorption force between the ice cream and the wing to achieve the purpose that the ice cream is not easy to slip or fall due to the influence of the tilt of the container body. When eating, different flavors of wings are fused with ice cream, so that consumers have different taste experiences and fun.

### 2. Description of the Related Art:

The main consumer group of ice cream is undoubtedly children. When buying ice cream, children or toddlers often shake involuntarily because their hands do not have a stable grip or are lively and playful. It is common for children or toddlers to hold ice cream in their hands, accidentally dump it or drop it on the ground in a blink of an eye, and then turn sad and even cry, or eat ice cream that melts and spills and stains their clothes or sticks to their hands. When ice cream is sold, it includes a container for hand-holding and ice cream rolls or ice cream balls in the container, and the container is divided into inedible paper cups or plastic cups or edible crispy cones formed from heated batter. When consuming ice cream in edible containers, you can enjoy ice cream and crispy biscuits at the same time. At the same time, you don't need to throw away the ice cream containers like paper cups or plastic cups after eating, causing unfriendly waste. Therefore, edible ice cream containers have gradually become the mainstream in the market.

From the above, it can be seen that the conventional edible container does not have any anti-tilt structure, so that the probability of ice cream slipping out of the edible container in a tilted state and sticking to hands or falling to the ground is greatly increased. The disadvantages of conventional edible containers need to be developed and solved by those engaged in this industry.

### SUMMARY OF THE INVENTION

Therefore, in view of the above problems, the inventor collected relevant information, and after various evaluations and considerations, he designed this anti-tip ice cream container.

The main object of the present invention is to provide an anti-tip ice cream container, which comprises an edible container body having a storage space therein for ice cream, and one or multiple edible wings arranged on the top side of the container body. Each wing has a supporting surface formed on the inner side for contacting the outer edge of the ice cream stored in the storage space to increase the adsorption force. The aforementioned one or more wings on the container body generate support and adsorption force on the ice cream, which can slow down the sliding speed of the ice cream after the container body is tilted. An annular groove is provided between the outer side of the wing and the outer edge of the top side of the container body, and the annular groove can receive the liquefied fluid of the ice cream without causing it to flow to the surface of the container body. Furthermore, an anti-pulling hole is provided in each wing to allow the outer edge of the ice cream to sink and form an anti-pulling force, which can strengthen the adsorption force between the ice cream and each wing, so that the ice cream is not easily affected by the tilt of the container body to cause slipping or falling. When eating, the wings of different independent flavors are fused with the ice cream, so that consumers have different taste experiences and fun.

Preferably, the container body comprises a first cylindrical part which is wider at the top and a second cylindrical part which is narrower at the bottom, and the storage space of the container body is divided into a first accommodating chamber located in the first cylindrical part and a second accommodating chamber located in the second cylindrical part.

Preferably, the first cylindrical part further comprises an inner race near the center, an outer race away from the center, an annular groove formed in a depression between the inner race and the outer race, and a plurality of partitions located in the annular groove.

Preferably, each wing further comprises an anti-pulling hole inside for the outer edge of the ice cream stored in the storage space to fall into.

Preferably, each wing is selectively curved or wavy when viewed from one lateral side.

### BRIEF DESCRIPTION OF THE DRAWINGS

FIG. 1 is a perspective view of the ice cream container of the present invention.
FIG. 2 is an applied view of the ice cream container of the present invention.
FIG. 3 is the structure diagram of the first implementation of the ice cream container of the present invention using one single wing.
FIG. 4 is the structure diagram of the second implementation of the ice cream container of the present invention using two wings.
FIG. 5 is a three-dimensional schematic diagram of the ice cream container of the present invention using separate wings.
FIG. 6 is a side view of the ice cream container of the present invention provided with different configuration wings.

### DETAILED DESCRIPTION OF THE PREFERRED EMBODIMENT

In order to achieve the above-mentioned objects and effects, the technical means and structure adopted by the present invention are hereby drawn to describe in detail the features and functions of the preferred embodiments of the present invention as follows, so as to facilitate a complete understanding.

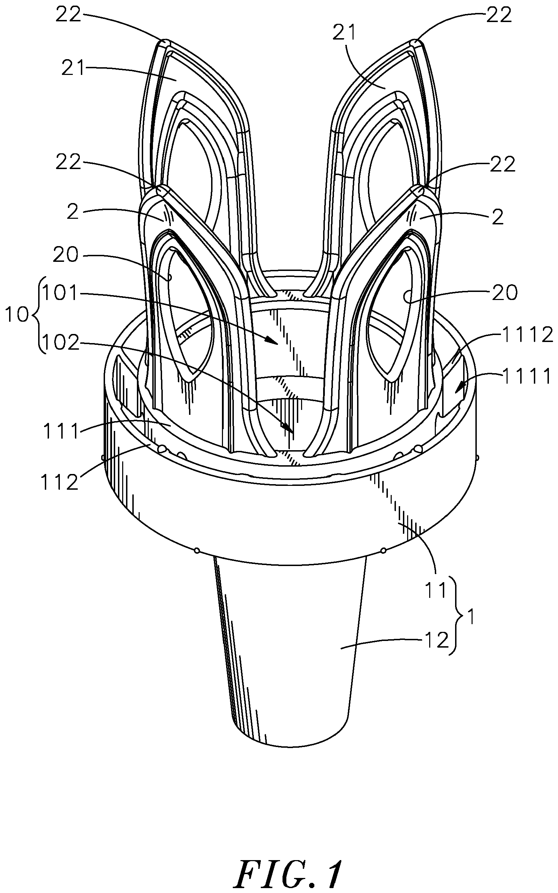

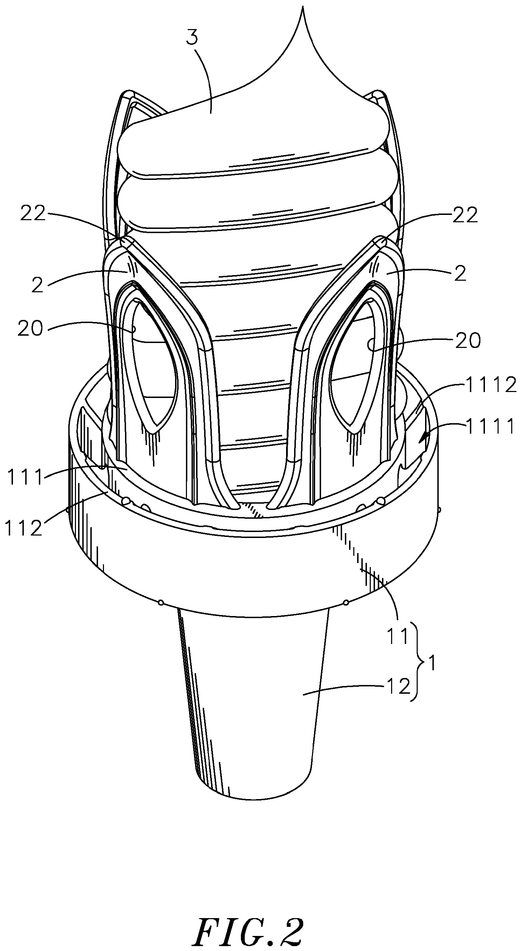

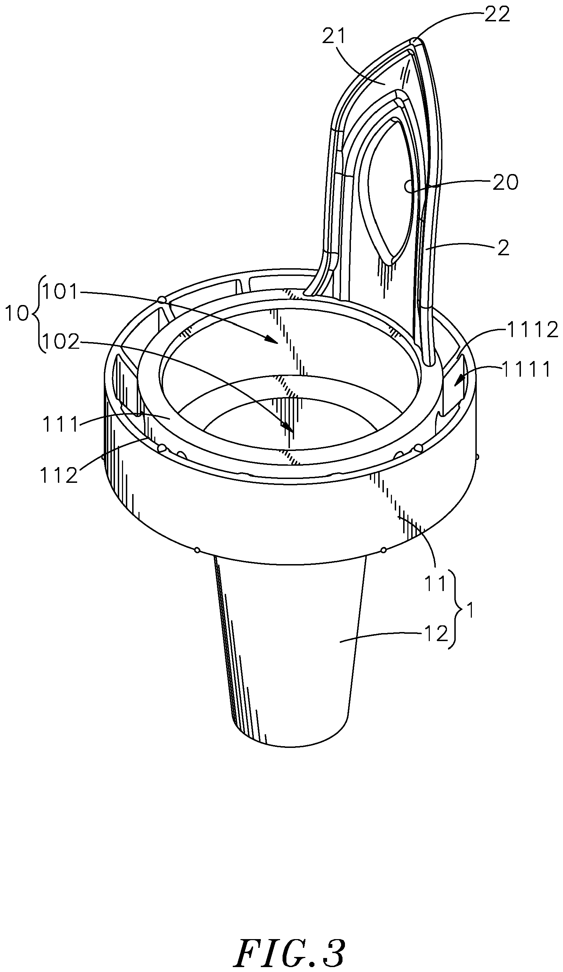

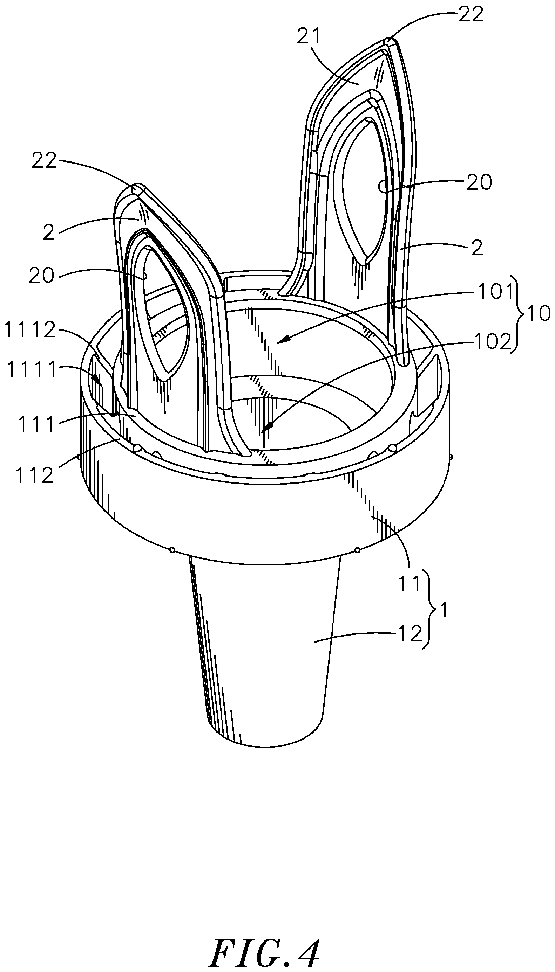

Please refer to FIGS. 1-4, where FIG. 1 is a perspective view of the ice cream container of the present invention, FIG. 2 is an applied view of the ice cream container of the present invention, FIG. 3 is the structure diagram of the first implementation of the ice cream container of the present invention using one single wing, and FIG. 4 is the structure diagram of the second implementation of the ice cream container of the present invention using two wings. It can be clearly seen from the figures that the ice cream container of the present invention mainly comprises: a container body **1** and at least one wing **2,** and its main components and features are described in detail as follows:
The container body **1** is edible, comprising a storage space **10** for storing ice cream **3** inside.

The at least one wing **2** is edible and is arranged on the top side of the container body **1.** The inner side of the wing **2** is formed with a supporting surface **21** that contacts the outer edge of the ice cream **3** and can increase the adsorption force, and the appearance of the wing **2** can be formed by different shapes.

The above-mentioned container body **1** comprises a first cylindrical part **11** that is wider at the top and a second cylindrical part **12** that is narrower at the bottom. The storage space **10** inside the container body **1** is divided into a first accommodating chamber **101** located in the first cylindrical part **11** and a second accommodating chamber **102** located in the second cylindrical part **12.** The first cylindrical part **11** further comprises an inner race **111** near the center, an outer race **112** away from the center, an annular groove **1111** formed in a depression between the inner race **111** and the outer race **112,** and a plurality of partitions **1112** located in the annular groove **1111.** These partitions **1112** strengthen the structure of the first cylindrical part **11** so that the first cylindrical part **11** is not easy to break. The partitions **1112** present an inclined structure with a higher outer edge and a lower center, which allows the liquefied fluid of the ice cream **3** to flow between two adjacent partitions **1112** in the annular groove **1111** to form an upward accumulation, and diffuse and flow from the center of the two adjacent partitions **1112** to the two sides, so as to avoid excessive concentration of the liquefied ice cream **3** in one place to cause rapid softening and overflow.

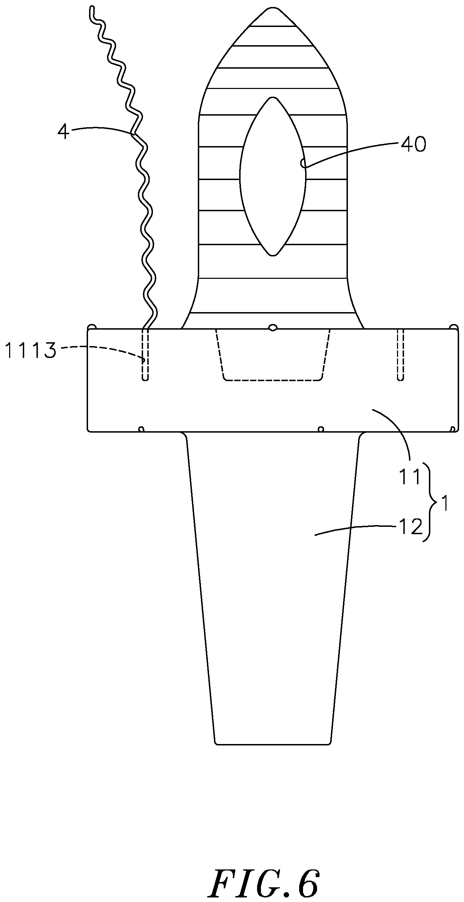

The inside of the above-mentioned wing **2** is further provided with an anti-pulling hole **20** close to an oval shape for the outer edge of the ice cream **3** to sink into. However, the shape of the anti-pulling hole **20** is not subject to any restrictions, for example, any geometric figure that can be demolded and produced is within the scope of protection. The appearance of the wing **2** is close to the shape of a crown flap and has a sharp top **22** that expands outward, and the position of the virtual line (not shown) extending downward from the sharp top **22** does not exceed the outer edge of the top side (referring to the outer race **112**) of the container body **1,** so as to achieve a smaller volume when storing multiple container bodies **1** and wings **2** and not being easily damaged by external collisions. The side of the wing (**2, 4**) presents a curved surface (as shown in FIG. 1 to 5) or a wave shape (as shown in FIG. 6).

The above-mentioned container body **1** and the wing **2** are integrally constructed, and the number of wing **2** is 1 to 4 pieces, and the optimized embodiment is 4 pieces, which can prevent the ice cream **3** from sliding or falling when the container body **1** is tilted in any direction of front, back, left or right.

Furthermore, it can be realized that the container body **1** and each wing **2** are composed of the same or different ingredients. When container body **1** and each wing **2** are different ingredients, for example: container body **1** can be an edible crispy cone after batter heating; and each wing **2** can be a biscuit chip or a potato chip with special seasoning ingredients, and special seasoning ingredients can be: salt, pepper, mustard, charred sugar, seaweed, black pepper or curry. The container body **1** and the wing **2** with special seasoning ingredients are already delicious when eaten alone, and when the container body **1** and the wing **2** are coupled with the ice cream **3,** the mixed taste can present a rich and varied layering. Furthermore, each piece of multiple wings **2** can be designed as different seasoning ingredients, and can present a variety of mix and match tastes, so that consumers can obtain more satisfaction and value-for-money feelings.

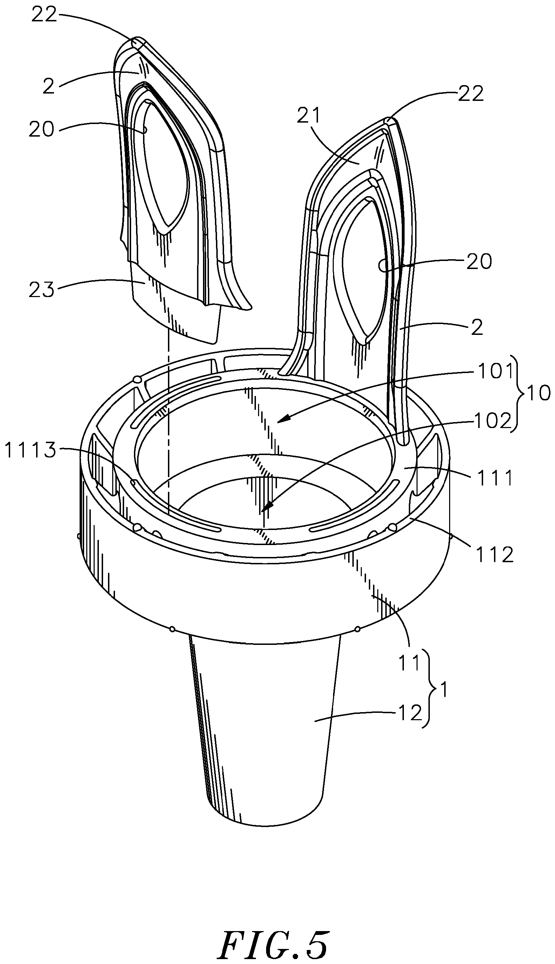

As shown in FIG. 5, it is a three-dimensional schematic diagram of the ice cream container of the present invention using separate wings, wherein the container body **1** and the wings **2** are separated structures. The container body **1** is provided with at least one arc-shaped positioning groove **1113** on the inner race **111,** and the bottom side of each wing **2** further comprises an insertion portion **23** extending into one of the at least one arc-shaped positioning groove **1113** and forming a snap-fit positioning. The container body **1** and the wings **2** are separate structures. With this separate structural design, multiple container bodies **1** and multiple wings **2** can be packaged and stored separately, so as to achieve optimal storage management by category.

As shown in FIG. 6, it is a side view of the ice cream container of the present invention provided with different configuration wings, which discloses that the container body **1** is plugged with wings **4** which each has an anti-pulling hole **40** inside and are composed of wavy sheets. After the ice cream **3** is wrapped around the inner side of a single or multiple wavy wings **4,** the outer edge of the ice cream **3** touches the depression of the wings **4** to form a snap-fit positioning structure, which can strengthen the adhesion effect between the wings **4** and the ice cream **3.** Coupled with the anti-pulling holes **40** of wings **4,** the outer edge of the ice cream **3** can be trapped to form an anti-pulling force, which can make the ice cream **3** less likely to slip or fall.

The main feature of the anti-tip ice cream container of the present invention is that one or more wings (**2, 4**) on the container body **1** generate support and adsorption force for the ice cream **3,** which can slow down the sliding speed of ice cream **3** after the container body **1** tilts; an annular groove **1111** is provided between the outer side of the wing (**2, 4**) and the outer edge of the top side of the container body **1,** and the annular groove **1111** can receive the liquefied fluid of the ice cream **3** without causing it to flow to the surface of the container body **1;** furthermore, an anti-pulling hole (**20, 40**) is provided in each wing (**2, 4**) to allow the outer edge of the ice cream **3** to sink and form an anti-pulling force, which can strengthen the adsorption force between the ice cream **3** and the wings (**2, 4**), so that the ice cream **3** is not easily affected by the tilt of the container body **1** to cause slipping or falling.

The above are only preferred embodiments of the present invention, and are not meant to limit the patent scope of the present invention. Therefore, all simple modifications and equivalent structural changes made by using the contents of the description and drawings of the present invention should be included in the patent scope of the present invention in the same way, and are hereby declared.

## Claims

1. An anti-tip ice cream container, comprising:
an edible container body (1) comprising a storage space (10) therein for ice cream (3); and
at least one edible wing (2, 4) arranged on a top side of said container body (1), each said wing (2, 4) comprising a supporting surface (21) formed on an inner side thereof for contacting an outer edge of the ice cream (3) stored in said storage space (10) to increase the adsorption force.

2. The anti-tip ice cream container as claimed in claim 1, wherein said container body (1) comprises a first cylindrical part (11) which is wider at the top and a second cylindrical part (12) which is narrower at the bottom, and said storage space (10) of said container body (1) is divided into a first accommodating chamber (101) located in said first cylindrical part (11) and a second accommodating chamber (102) located in said second cylindrical part (12).

3. The anti-tip ice cream container as claimed in claim 2, wherein said first cylindrical part (11) further comprises an inner race (111) near the center thereof, an outer race (112) away from said center, an annular groove (1111) formed in a depression between said inner race (111) and said outer race (112), and a plurality of partitions (1112) located in said annular groove (1111).

4. The anti-tip ice cream container as claimed in claim 1, wherein each said wing (2, 4) further comprises an anti-pulling hole (20, 40) inside for the outer edge of the ice cream (3) stored in said storage space (10) to fall into.

5. The anti-tip ice cream container as claimed in claim 1, wherein each said wing (2, 4) is selectively curved or wavy when viewed from one lateral side.

6. The anti-tip ice cream container as claimed in claim 1, wherein said container body (1) and said at least one wing (2, 4) are integrally constructed.

7. The anti-tip ice cream container as claimed in claim 1, wherein said container body (1) and said at least one wing (2, 4) are separate structures; said container body (1) further comprises at least one arc-shaped positioning groove (1113) located on said inner race (111), and each said wing (2, 4) further comprises an insertion portion (23) located on a bottom side thereof and inserted into one of respective said arc-shaped positioning groove (1113) to form a snap-fit positioning.

8. The anti-tip ice cream container as claimed in claim 1, wherein said container body (1) and said at least one wing (2, 4) are made of same ingredients.

9. The anti-tip ice cream container as claimed in claim 1, wherein said container body (1) and said at least one wing (2, 4) are made of different ingredients.
